(19) Europäisches Patentamt
European Patent Office
Office européen des brevets

(11) Publication number: 0 202 921
A2

(12) # EUROPEAN PATENT APPLICATION

(21) Application number: 86303835.2

(22) Date of filing: 20.05.86

(51) Int. Cl.[4]: C 08 F 6/06

(30) Priority: 20.05.85 JP 107276/85

(43) Date of publication of application: 26.11.86 Bulletin 86/48

(84) Designated Contracting States: DE FR GB NL

(71) Applicant: MITSUBISHI PETROCHEMICAL CO., LTD.
5-2, 2-chome, Marunouchi
Chiyoda-ku Tokyo 100(JP)

(72) Inventor: Inoue, Takayuki
c/o Mitsubishi Petrochemical Co. Ltd.
No. 1, Toho-cho Yokkaichi-shi Mie(JP)

(72) Inventor: Hattori, Masafumi
c/o Mitsubishi Petrochemical Co. Ltd.
No. 1, Toho-cho Yokkaichi-shi Mie(JP)

(72) Inventor: Hayama, Kazuhide
c/o Mitsubishi Petrochemical Co. Ltd.
No. 1, Toho-cho Yokkaichi-shi Mie(JP)

(72) Inventor: Maruta, Riichiro
c/o Mitsubishi Petrochemical Co. Ltd.
No. 1, Toho-cho Yokkaichi-shi Mie(JP)

(74) Representative: Moore, Anthony John et al,
Gee & Co. Chancery House Chancery Lane
London WC2A 1QU(GB)

(54) **Process for purifying maleic anhydride-modified polyolefins.**

(57) A process for purifying maleic anhydride graft polyolefin comprises adding an aqueous solution of alkali metal hydroxide to a solution of maleic anhydride graft polyolefin containing unreacted maleic anhydride and dissolved in an organic solvent at a temperature from 80°C to 160°C, thereby precipitating maleic anhydride graft polyolefin particles to make a W/O emulsion; stirring the W/O emulsion while maintaining the temperature within the above temperature range for less than 2 hours; adding further aqueous solution of alkali metal hydroxide to the W/O emulsion to change it into an O/W emulsion; and separating and washing the maleic anhydride graft polyolefin particles with water.

An organic solvent having no affinity for water and with a boiling point not lower than 80°C can be used, which simplifies the recovery of the solvent; moreover unreacted maleic anhydride is changed into water-soluble maleic anhydride salt, but grafted maleic anhydride groups in the modified polyolefin can be prevented from changing into alkali metal salt, by using a solution of inexpensive alkali metal hydroxide in a specific concentration, which provides maleic anhydride graft polyolefin with good adhesion.

EP 0 202 921 A2

# PROCESS FOR PURIFYING MALEIC ANHYDRIDE-MODIFIED POLYOLEFINS

This invention relates to a process for the purification of maleic anhydride graft polyolefins which have good adhesive property to metals or plastics such as polyamide, polyethylene terephthalate, saponified ethylene-vinyl acetate copolymer and polypropylene.

Hollow vessels constituted by laminates made of amaleic anhydride graft polyolefin obtained according to the present invention and polyamide, polyethylene terephthalate or saponified ethylene-vinyl acetate copolymer are useful as vessels for, e.g., fuel, soy sauce and chemicals; and bags constituted by films made of the above-mentioned laminates are useful as packing material for retort pouches. A laminate of aluminum foil and polyolefin, obtained by using maleic anhydride graft polyolefin as an adhesive agent is also useful as packing material for retort pouches.

Two types of process for the production of maleic anhydride graft polyolefin are already known, as follows:
(1) A solution polymerization process comprising the steps of dissolving a polyolefin, such as polyethylene, polypropylene, ethylene-vinyl acetate copolymer or ethylenepropylene copolymer in an organic solvent, such as benzene, toluene, xylene or chlorobenzene, under heating; and adding dropwise thereto an organic solvent containing maleic

anhydride and an initiator, such as dicumyl peroxide, followed by stirring the solution, thereby effecting graft polymerization (Japanese Patent Publication Nos. 3254/77 and 15422/69); and

(2) A melt polymerization process comprising the steps of heating a mixture of the above-mentioned polyolefin, maleic anhydride, and an initiator, followed by mulling the melt by the use of an extruder, thereby effecting graft polymerization (Japanese Patent Publication No. 39675/81).

The maleic anhydride graft polyolefin obtained by these processes still contains unreacted maleic anhydride which lowers adhesion to polyamide, metal, etc. In order to prevent the lowering of adhesion, the following types of process have been proposed:

(a) A process for removing unreacted maleic anhydride comprising the steps of cooling the maleic anhydride graft polyolefin down to room temperature after graft polymerization, washing with acetone, and drying under reduced pressure (Japanese Patent Publication No. 32654/77);

(b) A process for removing unreacted maleic anhydride comprising extracting maleic anhydride from maleic anhydride graft polyolefin with acetone (Japanese Patent Publication No. 15422/69; and

(c) A process for removing unreacted maleic anhydride comprising washing maleic anhydride graft polyolefin by

blowing pressurized steam thereinto.

Of these processes, processes (a) and (b) using acetone are expensive, since a proportion of the acetone (boiling point: 56.5°C) used is not recovered. Process (c) is not satisfactory for removing unreacted maleic anhydride when the particle size of the modified resin is large. In addition, the incidental equipment required for process (c) is expensive.

An object of the present invention is to provide a process for purifying maleic anhydride graft polyolefin which is free from the disadvantages of the prior art processes.

According to the present invention there is provided a process for purifying maleic anhydride graft polyolefin comprising the steps of adding an aqueous solution of alkali metal hydroxide to a solution of maleic anhydride graft polyolefin containing unreacted maleic anhydride dissolved in an organic solvent at a temperature from 80°C to 160°C, thereby precipitating maleic anhydride graft polyolefin particles to make a W/O emulsion; stirring the W/O emulsion while maintaining the temperature in the above range for less than 2 hours; adding further aqueous solution of alkali metal hydroxide to the W/O emulsion to change the W/O emulsion into an O/W emulsion; separating the maleic anhydride graft polyolefin particles; and washing the maleic anhydride graft polyolefin particles with water.

In the process of the present invention an organic solvent which is liquid under the conditions of ordinary temperature and atmospheric pressure and has no affinity for water can be used, thereby simplifying the recovery of the solvent; unreacted maleic anhydride is changed into water-soluble maleic anhydride salt by using a solution of inexpensive alkali metal hydroxide in a specific concentration; and grafted maleic anhydride groups in the modified polyolefin are prevented from changing into alkali metal salt, thereby providing a good adhesive property.

Some aspects of the present invention will now be described in more detail.

A. Polyolefin

Examples of the types of polyolefin to which the present invention is applicable include a homopolymer of an olefin, such as ethylene, propylene, 1-butene, 1-hexene, 3-methyl-1-pentene or 4-methyl-1-pentene; a random or block copolymer of two or more of olefins; and a random copolymer containing the olefin as a main component and one or more other compounds, such as vinyl acetate, acrylic acid, methacrylic acid or acrylic ester.

Typical examples of the polyolefin include high-density polyethylene, low-density polyethylene, linear low density polyethylene, polypropylene, ethylenepropylene copolymer, ethylene-vinyl acetate copolymer, ethylene-butene-1 copolymer, propylene-butene-1 copolymer, ethylene-ethyl acrylate copolymer and ethylene-methacrylic acid copolymer zinc salt.

These compounds can be used alone or in combination.

B. Maleic Anhydride

Maleic anhydride may be represented by the following general formula:

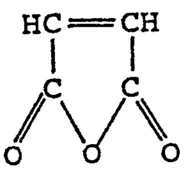

has a melting point of about 52.8°C, and is soluble in, e.g., acetone, benzene, chloroform, chlorobenzene.

The maleic anhydride is generally used in a proportion of from 0.05 to 40 parts by weight per 100 parts by weight of polyolefin, and is subject either to (1) the above-mentioned solution polymerization or (2) melt polymerization with the polyolefin, in the presence of an initiator.

As the initiator, an organic peroxide such as cumene peroxide, t-butyl perbenzoate or benzoyl peroxide, may be used.

It is preferable to employ solution polymerization (1) as a graft polymerization process because of its

inexpensiveness, since the solvent used for the polymerization can be used again as it is for the purification of the polymerization and the purification can be performed in the same reactor.

C. Maleic Anhydride Graft Polyolefin

Maleic anhydride graft polyolefin obtained by a typical general polymerization process commonly has a unit concentration of maleic anhydride of from 0.01 to 15% by weight (Japanese Patent Application (OPI) Nos. 16781/78 and 32078/77) (the term "OPI" as used herein refers to a "published unexamined Japanese patent application"). This modified polyolefin still contains unreacted maleic anhydride which inhibits the adhesive property thereof. Accordingly, it is necessary to remove the unreacted maleic anhydride.

D. Purification

Purification is performed by the steps of adding an aqueous solution of alkali metal hydroxide of a concentration of from 0.4 to 1.8% by weight to a solution of maleic anhydride graft polyolefin containing unreacted maleic anhydride dissolved in an organic solvent at a temperature from 80°C to 160°C, thereby precipitating maleic anhydride graft polyolefin particles to make a W/O emulsion; stirring the W/O emulsion while maintaining the temperature at a temperature within the above range for less than 2 hours; adding the aqueous solution of alkali

metal hydroxide so obtained to the W/O emulsion to change the W/O emulsion into an O/W emulsion; separating the maleic anhydride graft polyolefin particles; and washing the separated particles with water.

The organic solvent used must be a solvent having no affinity for water, and examples thereof include an aromatic hydrocarbon having a boiling point of 80°C or more, such as benzene, toluene, xylene or chlorobenzene; an aliphatic hydrocarbon, such as hexane, heptane, isooctane, methylcyclohexane or decahydronaphthalene; a halogenated hydrocarbon, such as trichloroethylene, chlorobenzene or dichlorobenzene; a preferred example thereof is chlorobenzene.

The organic solvent is used in a proportion of from 100 to 2,500 parts by weight, preferably from 500 to 1,500 parts by weight, per 100 parts by weight of maleic anhydride graft polyolefin.

The alkali metal hydroxide used may be LiOH, KOH, NaOH, or the like. Of these materials, NaOH is preferable because it is inexpensive. In order to remove the unreacted maleic anhydride as alkali metal salt, it is preferable to raise the concentration of alkali metal hydroxide in the aqueous solution of alkali metal hydroxide. If it is too high, however, even the maleic anhydride groups grafted into the modified polyolefin may be partly changed into alkali metal salt. Accordingly, the

concentration of the alkali metal hydroxide in the aqueous solution is preferably from 0.4 to 1.8% by weight.

The addition of the aqueous solution of the alkali metal hydroxide to the solution of modified polyolefin dissolved in the organic solvent is preferably performed with a solution temperature of 80°C or more to facilitate the reaction between the maleic anhydride and the alkali metal hydroxide. However, if the reaction temperature is too high, a proportion of the grafted maleic anhydride groups in the modified polyolefin may be changed into alkali metal salt. Reversely, if the reaction temperature is lower than 80°C, the grafted polyolefin rapidly begins to crystallize so as to destroy its emulsified state, thus allowing the unreacted maleic anhydride to be contained in the graft polyolefin particles, thereby making it difficult to remove the unreacted maleic anhydride by washing. Accordingly, the reaction temperature is preferably in the range of from 80°C to 160°C.

The alkali metal hydroxide is used such that the amount of the hydroxide groups is from 0.35 to 1.6 equivalent of the carboxyl groups of both of the maleic anhydride graft polyolefin and the unreacted maleic anhydride (in which non-open-circle acid groups are regarded as two equivalents of the carboxyl groups).

Upon the addition of the aqueous solution of alkali metal hydroxide to the solution of modified

polyolefin dissolved in the organic solvent, the mixture is stirred continuously at a temperature of from 80 to 160°C for less than 2 hours, preferably at a temperature of from 90 to 140°C for a period of time of from 10 minutes to 1.5 hours, while the mixture is maintained in the W/O emulsion state thereby mainly to effect neutralization of the unreacted maleic anhydride. At this time, a proportion of the dissolved maleic anhydride graft polyolefin begins to precipitate, and a proportion of the alkali metal salt of the maleic anhydride begins to dissolve in the water phase. If the stirring is performed by the use of an agitator, for example a line mixer, having high shearing power, the neutralization may be completed in 5 to 120 seconds.

The further addition of the aqueous solution of alkali metal hydroxide is made while stirring to change the phase into O/W emulsion, thereby facilitating the dissolution of alkali metal salt of maleic anhydride into the water phase and the precipitation of maleic anhydride graft polyolefin particles.

Thereafter, the maleic anhydride graft polyolefin particles are separated by means of centrifugal separation or the like, and then washed with water at a temperature of from 10 to 90°C. The washing is repeated and, if necessary, the particles are dried under reduced pressure or dried

with centrifugal separation to thus obtain modified polyolefin particles free from most or all of the unreacted maleic anhydride.

The concentration of the grafted maleic anhydride in the thus obtained maleic anhydride graft polyolefin particles is in the range of from 0.01 to 15% by weight, preferably from 0.1 to 10% by weight.

The maleic anhydride graft polyolefin is utilizable as adhesive resin, a coating resin or a dispersion agent for inorganic fine powder and pigment either alone, diluted with non-modified polyolefin or blended with thermoplastic resin such as rubber, polyamide or saponified ethylene-vinyl acetate copolymer.

EXAMPLE 1

100 parts by weight of isotactic polypropylene having a melt flow rate of 25 g per 10 minutes and 600 parts by weight of chlorobenzene were introduced into a vessel equipped with a cooler and heated to 125°C to dissolve the isotactic polypropylene; and 28 parts by weight of maleic anhydride were then added thereto and dissolved. After dissolution, 105 parts by weight of a chlorobenzene-solution in which 5 parts by weight of dicumyl peroxide were dissolved, were added dropwise to the resulting mixture while stirring the mixture at 125°C for 5 hours; and then the mixture was kept at the same temperature for 1 hour thus to perform graft

polymerization.

The polymerizing solution was then cooled down to 100°C, and 400 parts by weight of an aqueous solution of sodium hydroxide having one of the concentrations as shown in Table 1 was added at the same temperature to the polymerizing solution over 10 minutes, while maintaining the temperature at the same temperature as above, to thereby obtain a W/O emulsion. After the completion of the addition, the temperature was further maintained at the same temperature as above for a further hour to precipitate polymer particles.

Next, 1,600 parts by weight of sodium hydroxide aqueous solution having the same concentration was added dropwise to the resulting mixture at 100°C for half an hour. The temperature was maintained at the same temperature as above for a further half hour, and then the mixture was cooled down to room temperature (20°C).

Next, the thus precipitated polymer particles were centrifugally separated, washed with 2,000 parts by weight of water, and dried with centrifugal separation to obtain maleic anhydride graft propylene particles containing unreacted maleic anhydride in the amount shown in Table 1 and 5.1% by weight of grafted maleic anhydride.

A resin mixture of 78 parts of non-modified polypropylene (MI: 0.8; sp.gr.: 0.91), 20 parts of ethylene-propylene rubber (ethylene content: 75% by weight;

Mooney viscosity: 70), and 2 parts of the thus obtained maleic anhydride graft polypropylene, was extruded in strand form at a temperature of 250°C to make a pellet.

Press sheets each having a thickness of 0.5 mm were prepared by using the pellet and nylon 6 (tradename: Novamide 1040, Mitsubichi Chemical Industries, Ltd.). The two press sheets were press-welded to each other under the condition of 40kg/cm² and 230°C by means of an electric press for 3 minutes thereby to obtain a laminate.

The adhesion strength between the two layers of the laminate was measured as shown in Table 1.

Table 1

| Concentration of Sodium Hydroxide Aqueous Solution (wt%) | Equivalent Weight of NaOH per 28 Parts by Weight of Maleic Anhydride for Neutralization | Graft Polyolefin Particles: Concentration of Maleic Acid Anhydride Group * (wt%) | Graft Polyolefin Particles: Content of Unreacted Maleic Anhydride (wt%) | Graft Polyolefin Particles: Existence of $-COO^{\ominus}Na^{\oplus}$ Group ** | Laminate: Adhesion Strength (kg/15 mm) |
|---|---|---|---|---|---|
| 0 | 0 | 6.1 | 0.8 | Absence | 1.7 |
| 0.4 | 0.350 | 5.3 | 0.2 | Absence | 4.5 |
| 0.6 | 0.525 | 5.2 | 0.1 | Absence | 5.4 |
| 0.8 | 0.700 | 5.2 | 0.1 | Absence | 6.0 |
| 1.0 | 0.875 | 5.2 | 0.1 | Absence | 6.0 |
| 1.2 | 1.05 | 5.2 | 0.1 | Absence | 5.9 |
| 1.4 | 1.225 | 5.1 | 0 | Absence | 5.8 |
| 1.6 | 1.40 | 4.9 | 0 | Little | - |
| 1.8 | 1.575 | 4.3 | 0 | Presence | 4.0 |
| 2.0 | 1.750 | 3.1 | 0 | Presence | - |
| 4.0 | 3.500 | 2.7 | 0 | Presence | 2.8 |

Note: *: The sum of grafted maleic anhydride group and unreacted maleic anhydride group.

**: The existence of an absorption peak of 1,570 $cm^{-1}$ in infrared spectrum.

EXAMPLE 2

The same procedures as described in Example 1 were repeated except that the concentration of sodium hydroxide added was selected to be 0.4% by weight and the maintaining time of half an hour after the W/O emulsification was changed to such time as shown in Table 2. Thus, maleic anhydride graft polypropylene particles containing 5.1% by weight of grafted maleic anhydride were obtained.

Table 2

| | Graft Polyolefin Particles | | |
|---|---|---|---|
| Maintaining Time (hours) | Concentration of Maleic Anhydride Group (wt%) | Concentration of Unreacted Maleic Anhydride (wt%) | Existence of $-COO^{\ominus}Na^{\oplus}$ Group |
| 1/6 | 5.2 | 0.1 | Absence |
| 1 | 5.2 | 0.1 | Absence |
| 2 | 5.2 | 0.1 | Absence |
| 3 | 3.9 | 0 | Presence |
| 4 | 2.3 | 0 | Intensive Peak |

It will be apparent from Table 2 that the neutralized amount of the maleic anhydride group graft-polymerized with polypropylene increased as the maintenance time was prolonged over 3 hours.

EXAMPLE 3

After 0.2 part by weight of 2,5-dimethylhexane-2,5-

hydroxyperoxide and 0.3 part by weight of maleic anhydride were added to 100 parts by weight of high-density polyethylene powder (MI: 0.5; sp.gr.: 0.96), the reactants wère mixed by Henschel mixer. The resulting mixture was extruded by an extruder of 40 mm diameter and L/D = 28 at 220°C, and cooled with water to make a pellet.

Next, 100 parts by weight of the pellet of maleic anhydride graft high-density polyethylene were added to 2,000 parts by weight of p-xylene and heated up to 90°C to obtain a solution.

To the resultant solution, 400 parts by weight of an aqueous solution of sodium hydroxide having a concentration of 0.6% by weight was added at 110°C over half an hour while stirring, to obtain a W/O emulsion. After the addition, the temperature was maintained at the same temperature as above for further 20 minutes.

Next, 1,600 parts by weight of sodium hydroxide aqueous solution having the same concentration was added at the same temperature to tne resultant mixture over half an hour dropwise while stirring, to thereby change the phase into an O/W emulsion. The temperature was maintained at the same temperature as above for further 30 minutes, and then the mixture was cooled down to 20°C.

Next, the thus precipitated graft polyethylene particles were centrifugally separated, washed with 1,800

parts by weight of water, and dried with centrifugal separation to obtain maleic anhydride graft polyethylene particles containing 0.29% by weight of grafted maleic anhydride.

The unreacted maleic anhydride content of these particles was 0.02% by weight and the existence of $-COO^{\ominus}Na^{\oplus}$ groups was not detectable.

Press sheets each having a thickness of 0.5 mm were prepared by using the purified modified polyethylene particles and nylon 6, and the two press sheets were press-welded to each other under the conditions of 40 $kg/cm^2$ and 230°C by means of an electric press for 5 minutes to thereby obtain a laminate.

As a comparison, another laminate was obtained by using before-purified graft polyethylene particles and nylon 6.

The adhesion strength of each of these laminates is shown below:

5 kg/15 mm (example according to the invention)

1.3 kg/15 mm (comparative example)

CLAIMS

1. A process of purifying maleic anhydride graft polyolefin containing unreacted maleic anhydride, characterised in that an aqueous solution of alkali metal hydroxide is added to a solution of maleic anhydride graft polyolefin containing unreacted maleic anhydride dissolved in an organic solvent at a temperature from 80°C to 160°C, thereby precipitating maleic anhydride graft polyolefin particles to make a W/O emulsion; said W/O emulsion is stirred for less than 2 hours while the temperature is maintained at the above temperature; further aqueous solution of alkali metal hydroxide is added to said W/O emulsion to change said W/O emulsion into an O/W emulsion; and said maleic anhydride graft polyolefin particles are separated and washed with water.

2. A process according to claim 1, wherein said organic solvent is chlorobenzene.

3. A process according to claim 1 or 2, wherein the amount of said organic solvent is from 100 parts by weight to 2,500 parts by weight per 100 parts by weight of said maleic anhydride graft polyolefin.

4. A process according to any preceding claim, wherein said alkali metal hydroxide is sodium hydroxide.

5. A process according to any preceding claim, wherein the concentration of said aqueous solution of

said alkali metal hydroxide is from 0.4 to 1.8% by weight.